# EUROPEAN PATENT APPLICATION

(11) **EP 2 214 144 A1**
(43) Date of publication of application: **04.08.2010**
(21) Application number: 08852825.2
(22) Date of filing: 23.10.2008
(51) Int. Cl.: G07F 17/00, G10H 1/36

(54) **KARAOKE JUKEBOX WITH MULTIPLATFORM RECORDING, VIDEO PROJECTOR AND WIRELESS CONNECTIVITY**

(30) Priority: 19.11.2007 ES 200703129
(71) Applicant: Victoria Pons, Francisco Manuel, 46702 Gandia (Valencia) (ES)
(72) Inventor: Victoria Pons, Francisco Manuel, 46702 Gandia (Valencia) (ES)
(74) Representative: Isern-Jara, Nuria
(86) International application number: PCT/ES2008/000673
(87) International publication number: WO 2009/065980

(57) **Abstract**

The invention comprises a piece of furniture (1) with a computer, a video monitor (2), a video camera (3), an audio device, a DVD and Blu-ray disc recorder, a video projection system (14) and a panel (13) for connecting Flash storage devices with multi-connector and USB, forming a compact karaoke jukebox system all controlled by special software. The image of the user captured by the video camera is processed digitally with special effects and, along with the words of the song, is displayed on the video monitor and projected onto an additional external screen. The machine, which is coin-operated (4), can record action on any mass data storage platform. The machine also has Bluetooth, infrared and Wi-Fi (WLAN) wireless connectivity, making it possible to transfer the recording to devices such as mobile telephones, PDAs, etc.

## Description

### OBJECT OF THE INVENTION

The present invention relates to an innovative Karaoke device that is made up of a complete piece of audio equipment, a video recording system with a camera and digital video effect processor included, all of which is controlled by a computer.

The machine can be used in pubs, recreation and leisure centres, hotels, recording studios, etc., and can be made to work with coins.

Hence, the power to have a complete professional karaoke system with video recording is brought within the reach of anyone so as to be able to create a video clip of a personal performance (video and sound) in an easy, convenient and very economical manner within a few moments.

This video clip can be transferred to any of the four following platforms:
- On a DVD or BLU-RAY with high definition video.
- To wireless devices (Bluetooth, infra-red, WI-FI, WLAN, GPRS), likewise mobile phones, PDAs, etc.
- Massive data storage devices like flash memory, USB, MPG players, etc.
- Via the Internet using e-mail or a web site.

In the last three options the interest lies in the fact that the transfer is very easy and avoids the cost of the disc.

The machine has a video projection system in the upper part that is made up of a video projector and reflector mirrors, in such a way that the image that appears on the screen can also be projected to a much larger external screen which is more suitable for the public.

### BACKGROUND TO THE INVENTION

One of the first pieces of karaoke equipment was the laser disk karaoke (now obsolete) that worked with laser disks that are similar to the compact disk but with video and with greater size and duration.

The most recent karaoke devices are the domestic DVD players with the addition of tone change, however any DVD or Video CD player is valid because the current commercial karaoke disks are made to work on these devices.

A piece of sound equipment must be added to these players and one or more video screens where the synchronised words of the song can be seen as the music is playing and some video images that usually have some connection to the words.

There is also karaoke software for personal computers in which a MIDI file can be heard and where the words are synchronised with the playing, which can be edited by the users themselves.

There are karaoke jukeboxes that work with coins and are made up of a karaoke device that plays the music files and shows the words of the song on a video screen with a video clip. These pieces of equipment have the sound devices completely incorporated. There are also karaoke jukeboxes that include a video camera and video-cassette recorder that records the performance of the singer, the loading of the tape being in a manual manner.

Finally, there is the karaoke jukebox machine with a DVD recorder from the same author as this present invention with application number P200202284.

The new karaoke jukebox incorporates significant novelties.

### DESCRIPTION OF THE INVENTION

It is therefore the object of the present invention to provide a karaoke machine according to the features of first patent claim.

Preferred embodiments of the invention are described in the dependent claims.

### A BRIEF DESCRIPTION OF THE DRAWINGS

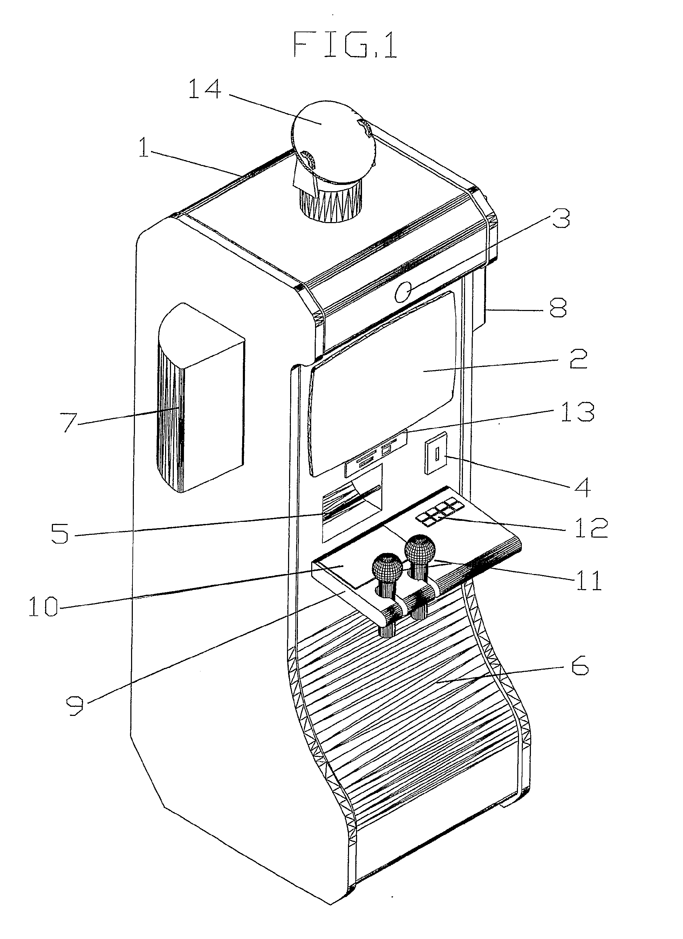

Figure 1.- It is a frontal perspective view of a karaoke jukebox machine according to the present invention; and
Figure 2.- It is a rear perspective view of the machine of the invention.

### DESCRIPTION OF PREFERRED EMBODIMENT

The karaoke jukebox with multi-platform recording and video projection consists of a housing unit (1) that has a computer on the inside with the songs recorded onto the hard disk, some peripherals and a programme.

The fact that the songs are recorded on the hard disk of the computer means that the access is immediate.

The programme is designed to carry out the karaoke functions and control the peripherals such as a DVD or BLU-RAY disk recorder for high definition video, the automatic disc feed, the sound and video system, etc.

On the inside of the housing there is a powerful audio amplifier that sends the mixed sound of the music and the voice to some loudspeakers (7) and (8) that will play the middle and high frequencies, and a loudspeaker (6) for the low frequencies.

On the central part of the housing there is a tray (9) where a pair of microphones (11) are placed that can be taken by the user when he/she is going to sing.

The tray can also have printed information (10) for the instructions on how to use the equipment, in addition some control buttons (12) so as to choose the song, start the playing and recording, select the digital image effects, etc.

The video screen (2) points out the words of the song, synchronised with the music that is playing, together with the images captured by the video camera (3) that can be processed digitally and to achieve attractive effects.

One of these effects can be the replacement of the background with a video image synthesised by the computer. In order to do this there has to be a blue background placed behind the subject. In this way, the singer will appear on the screen with a background of a landscape, a scene, etc.

A mechanism for the payment by coins (4) activates the machine so as to allow it to be used in an automatic manner by the user without the need for any technician or employee to be present in the event of being used in public premises for leisure or entertainment.

The equipment is fitted with a recording system that allows the performance to be transferred (images captured by the video camera together with the mix of the music and the voice of the user) for the creation of a video clip.

The receptacle (5) supplies the compact disk in the event that the user has chosen this recording option.

The machine is provided with audio and video outputs (17) so as to be able to connect some external loudspeakers and screens.

The machine is provided with USB (21) and memory card (13) connectors and an Internet connection (20), likewise an electricity supply plug (22) located at the back of the machine.

The Internet connection allows the machine to update the songs, carry out diagnostics on the machine, obtain statistics of the songs most used, distribution of the video clip and all of the possibilities that the Internet can offer.

The software will also allow the machine to be used as a music player machine (audio jukebox), video clip player, in addition to commercial karaoke video songs (with video clip images).

The machine also has wireless connectivity that allows the video clip to be transferred to other devices such as mobile phones, PDAs, etc.

Wheels (18) and a handle (15) make the transport of the machine easier.

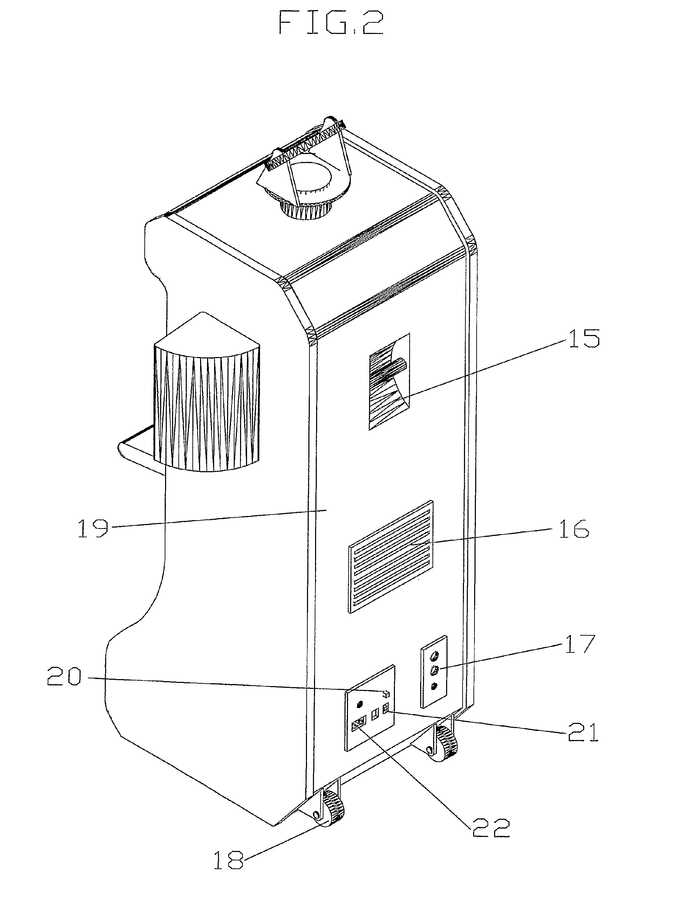

The rear part of the machine (19) can be easily removed so as to gain access to the inside of the machine and includes a ventilation point (16) as can be clearly seen in Figure 2.

On the inside of the machine there is a video projector assembled in a vertical manner, and on the top there is a hinged mirror (14) assembled onto a circular guide and which can be turned in such a way that the video projector image can be directed through 360 degrees and it can be raised or lowered by moving the mirror on its hinge. The image is projected onto an external screen.

## Claims

1. Karaoke jukebox machine based on a computer with the music on hard disk, that includes a video camera, and **characterised in that** it records the performance of the singers onto massive data storage devices.

2. Karaoke jukebox machine, according to claim 1, **characterised in that** it has the property of being able to record BLU-RAY discs with high definition video.

3. Karaoke jukebox machine, according to claim 1, **characterised in that** it has the property of being able to record onto USB memory sticks.

4. Karaoke jukebox machine, according to claim 1, **characterised by** having the property of being able to record onto flash memory (Memory card).

5. Karaoke jukebox machine, **characterised in that** it has wireless connectivity (Bluetooth, WLAN, WI-FI, infrared, GPRS, etc.) for the transfer of the video clip that has been recorded to an external device such as a mobile phone, PDA or similar.

6. Karaoke jukebox machine, **characterised in that** at the top it has a video projector system so as to use an large external screen.

7. Karaoke jukebox machine, **characterised in that** it has the property of being able to broadcast the video clip via the Internet.

## Amended claims

### Amended claims under Art. 19.1 PCT

1. Karaoke jukebox machine based on a computer with the music on the hard disk associated with a programme, that includes a video camera, an audio equipment with microphones and loudspeakers, a video screen and a recording system so as to transfer the performance captured by the video camera for the creation of a video clip, **characterised in that** it comprises external memory devices for the massive storage of data associated with the recording system so as to record the performance of the singers,
and also **characterised in that** it has wireless connectivity (Bluetooth, WLAN, Wi-Fi, Infra-red, GPRS, etc) for the transfer of the video clip recorded to an external device such as a mobile phone, a PDA or the like.

2. Karaoke jukebox machine, according to claim 1, **characterised in that** it comprises a BLU-RAY recorder with high definition video controlled by the programme;

3. Karaoke jukebox machine, according to claim 1, **characterised in that** the data storage device consists of a USB memory connector.

4. Karaoke jukebox machine, according to claim 1, **characterised in that** the data storage device consists of a flash technology memory card.

5. Karaoke jukebox machine, according to claim 1, **characterised in that** at the top it has a video projector system so as to use an large external screen.

6. Karaoke jukebox machine, according to claim 5, **characterised in that** the projection system comprises a video projector and reflector mirrors, in such a way that the image that appears on the video screen is projected to the external screen.

7. Karaoke jukebox machine, according to claim 1, **characterised in that** it comprises an Internet connection so as to broadcast the recorded video clip via the Internet.
